(19) Europäisches Patentamt
European Patent Office
Office européen des brevets

(11) Veröffentlichungsnummer: **0 231 856 B1**

# (12) EUROPÄISCHE PATENTSCHRIFT

(45) Veröffentlichungstag der Patentschrift: **13.03.91**

(51) Int. Cl.5: **G11B 7/24**, G11C 13/04

(21) Anmeldenummer: **87101081.5**

(22) Anmeldetag: **27.01.87**

## (54) Verfahren zur reversiblen optischen Datenspeicherung.

(30) Priorität: **04.02.86 DE 3603266**

(43) Veröffentlichungstag der Anmeldung:
**12.08.87 Patentblatt 87/33**

(45) Bekanntmachung des Hinweises auf die Patenterteilung:
**13.03.91 Patentblatt 91/11**

(84) Benannte Vertragsstaaten:
**DE FR GB IT NL**

(56) Entgegenhaltungen:
**EP-A- 0 007 574**
**EP-A- 0 171 045**
**DE-A- 3 324 770**
**DE-A- 3 334 056**
**DE-B- 2 740 076**

**THE TRANSACTIONS OF THE IECE OF JAPAN, Band E61, Nr. 6, abstracts, Seite 493; K. KUBOTA et al.: "Hologram memory using one dimensional tourier transform-image hologram"**

(73) Patentinhaber: **Röhm GmbH**
**Kirschenallee Postfach 4242**
**W-6100 Darmstadt 1(DE)**

(72) Erfinder: **Eich, Manfred**
**Bockenheimer Landstrasse 7**
**W-6000 Frankfurt 1(DE)**
Erfinder: **Wendorff, Joachim, Dr.**
**Reiherstrasse 18**
**W-6085 Nauheim(DE)**

EP 0 231 856 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gebiet der Erfindung

Die Erfindung betrifft eine Verfahren zur reversiblen, optischen Datenspeicherung unter Verwendung von polymeren Flüssigkristallen.

Stand der Technik

Zwischen der festen kristallinen Phase und der fluiden Schmelze, im folgenden als isotrope Schmelze gekennzeichnet, treten in bestimmten Substanzen Zwischenphasen auf, die in struktureller und dynamischer Hinsicht Eigenschaften sowohl des geordneten kristallinen Zustands als auch des ungeordneten Schmelzzustandes in sich vereinigen. So sind diese Phasen zwar fluide, weisen aber z. B. optische Eigenschaften auf, die charakteristisch für die Mehrzahl kristalliner aber auch teilkristalliner Stoffe sind: sie sind doppelbrechend. Man spricht aus unmittelbar einsehbaren Gründen von Zwischenphasen (Mesophasen) oder auch von flüssig-kristallinen Phasen. Diese Zwischenphasen sind über eine Temperaturvariation zu erhalten - in diesem Fall spricht man von thermotropen Flüssigkristallen - oder auch in Lösung über Konzentrationsvariationen. Im folgenden sollen nur thermotrope Flüssigkristalle betrachtet werden. Zur Charakterisierung der Existenzbereiche dieser Zwischenphasen gibt man im allgemeinen die z. B. kalorimetrisch oder mittels Polarisationsmikroskop bestimmten Übergangstemperaturen vom kristallinen Zustand in den flüssig-kristallinen Zustand sowie vom flüssig-kristallinen Zustand in den der isotropen Schmelze (Klärpunkt) an. Ferner wird beim Vorliegen unterschiedlicher flüssig-kristalliner Zustände der Satz der entsprechenden Übergangstemperaturen angegeben.

Das Auftreten von Mesophasen ist gekoppelt mit Besonderheiten in der Molekülgeometrie. Sphärisch symmetrische Moleküle können keine Mesophasen ausbilden, wohl aber Moleküle,deren Gestalt sich grob als zylinderförmig oder scheibchenförmig charakterisieren läßt. Dabei können die Moleküle starr sein,und das Verhältnis ihrer maximalen zu ihrer minimalen Abmessung (z. B. Zylinderlänge/Zylinderdurchmesser) muß einen kritischen Wert von ca. 3 deutlich überschreiten.

Die Struktur solcher Mesophasen ist nun dadurch gekennzeichnet, daß im einfachsten Fall für zylinderförmige Moleküle, in der sog. nematischen Phase, die Molekülzentren ungeordnet wie in einer isotropen Schmelze verteilt sind, während die Längsachsen der Moleküle parallel zueinander orientiert sind. Das ist abweichend vom Zustand in der isotropen Schmelze, wo die Molekülachsen statistisch verteilt vorliegen. Die Folge sind anisotrope mechanische, elektrische aber auch optische Eigenschaften. Bei der cholesterischen Phase kommt als zusätzliches Ordnungsprinzip eine kontinuierliche helikale Variation der Orientierungsrichtung der Moleküllängsachsen hinzu, was zu besonderen optischen Eigenschaften,wie starke optische Aktivität oder Selektivreflektion von Licht,führt. Bei den sogenannten smektischen Phasen tritt schließlich in Ergänzung zu der bereits beschriebenen Orientierungsordnung, wie sie für den nematischen Zustand charakteristisch ist, eine regelmäßige Anordnung der Molekülschwerpunkte im Raum hinzu, z.B. nur entlang einer räumlichen Achse aber auch, in anderen smektischen Modifikationen, entlang zwei oder gar drei voneinander unabhängigen Achsen. Dennoch sind diese Phasen fluide.
Scheibchenförmige Moleküle vermögen sogenannte diskotische Phasen auszubilden, in denen entweder nur die Scheibchennormalen parallel zueinander orientiert sind ( vgl. nematische Phase) oder aber in denen die Scheibchen innerhalb von Säulen in regelmäßiger oder unregelmäßiger Weise angeordnet sind. Man spricht von kolumnaren Strukturen in diesem Fall.

Eine charakteristische und für die Anwendung sehr wichtige Größe flüssig-kristalliner Strukturen ist der Orientierungsordnungsparameter, der ein Maß für die Güte der Orientierungsordnung ist. Sein Wert liegt zwischen 0 bei vollständiger Desorientierung (wie in der isotropen Schmelze) und 1 bei perfekter Parallelorientierung aller molekularer Längsachsen.

Die weite Verbreitung von flüssig-kristallinen Substanze in technischen Produkten,wie Anzeigeelementen in Taschenrechnern, Armbanduhren oder digitalen Meßgeräten,beruht auf der Eigenart, daß sich die Orientierungsrichtung, die sich durch den sogenannten Direktor repräsentieren läßt, durch von außen einwirkende elektrische, magnetische oder mechanische Felder leicht verändern läßt. Die dadurch bedingten Veränderungen in den optischen Eigenschaften lassen sich in Kombination mit weiteren Komponenten,wie Polarisatoren, Zellenwänden usw. in Anzeigeelementen zur Informationsdarstellung verwenden. Die Zellenwände dienen dabei dem Schutz der fluiden Mesophasen und geben die geforderte makroskopische Gestalt des Flüssigkristallfilms vor.

In den letzten Jahren hat man erkannt, daß es für viele Anwendungsgebiete vorteilhaft sein kann, die

Eigenschaften von flüssigkristallinen Phasen mit denen von Polymeren zu kombinieren. Die vorteilhaften Polymereigenschaften sind dabei gute mechanische Eigenschaften, was die Herstellung dünner, formstabiler Filme aus solchen Substanzen möglich macht, sowie das Auftreten eines Einfriervorgangs (Glasübergang),was das Fixieren einer vorgegebenen Orientierungsstruktur möglich macht. Die Angabe der z. B. kalorimetrisch ermittelbaren Glastemperatur $T_g$ dient zur Kennzeichnung des Existenzbereiches der festen flüssig-kristallinen Phase. Oberhalb dieser Temperatur weist das Polymere einen viskoelastischen oder zähelastischen Zustand auf.

Theorien zur Ausbildung flüssig-kristalliner Phasen allgemein und zur Ausbildung solcher Phasen in Polymersystemen im Besonderen sowie experimentellen Befunde zeigen, daß der Weg zu flüssigkristallinen Polymeren über die Verwendung von starren mesogenen Struktureinheiten, wie sie für niedrigmolekulare Flüssigkristalle charakteristisch sind, in Verbindung mit flexiblen Spacergruppen und flexiblen Kettenmolekülen führt. Dabei sind sehr unterschiedliche Bauprinzipien möglich. Die mesogenen Gruppen sind bei der Klasse der Seitenketten-Flüssigkristalle über einen flexiblen Spacer, gegebenenfalls auch ohne diesen Spacer, an einer flexiblen oder semiflexiblen Hauptkette fixiert. Bei den mesogenen Gruppen kann es sich dabei um zylinderförmige oder scheibchenförmige handeln. Die Hauptkette kann dabei auch mesogene Gruppen enthalten, die durch flexible Einheiten getrennt sind. Copolymere, dadurch charakterisiert, daß innerhalb eines Polymeren verschiedene Spacer und/oder mesogene Gruppen auftreten, können ebenfalls flüssig-kristalline Phasen ausbilden.

Neben diesen Seitenketten-Flüssigkristallen zeigen auch Hauptkettenpolymere unter bestimmten Bedingungen flüssig-kristalline Phasen. Die Bedingungen hierfür sind, daß die Ketten entweder vollständig aus starren Gruppen aufgebaut sind, oder aber aus starren und flexiblen Gruppen. Copolymere aus verschiedenen mesogenen Gruppen und/oder Spacergruppen vermögen ebenfalls flüssig-kristalline Phasen auszubilden. Die mesogenen Gruppen können eine eher zylinderförmige bzw. eine eher stäbchenförmige Gestalt aufweisen. Die Natur der Mesophasen sowie die Existenzbereiche dieser Phasen sowie des Glaszustands lassen sich über die Struktur der mesogenen Gruppen, über die Spacerlänge und -flexibilität, die Flexibilität der Hauptkette sowie über deren Taktizität und Länge näherungsweise einstellen.

In den Markt eingeführt sind bisher praktisch nur Hauptkettenpolymere mit ausschließlich starren Einheiten gemäß BI oder mit überwiegend starren Einheiten. Sie weisen extrem hohe Werte für die Festigkeit und die Steifigkeit auf. Man spricht von sich selbst verstärkenden thermoplastischen Kunststoffen. Ihr Einsatzgebiet sind technische Teile, in denen extreme mechanische Eigenschaften gefordert sind. (Vgl. Kirk-Othmer, Encyclopedia of Chemical Technology, 3rd. Ed. Vol 14 , pg. 414 - 421, (1984); J.H. Wendorff, Kunststoffe 73 , 524 - 528 (1983); M.G. Dobb, J.E. McIntyre Adv. Polym. Sci. 60/61 , 61 - 98 (1984).

Polymere mit flexiblen und starren Einheiten haben noch nicht in auf dem Markt eingeführten Systemen Verwendung gefunden. Ihr Vorteil besteht in einem im Vergleich zu Seitenketten-Flüssigkristallen hohen Wert des Orientierungsordnungsparameters(Vgl. C. Noel, F. Laupretre, C. Friedrich, B. Fagolle, L. Bosio, Polymer 25 , 808 - 814 (1984); B. Wunderlich, I. Grebowicz Adv. Polymer. Sci. 60/61 , 1 - 60 (1984), Kirk-Othmer, Encyclopedia of Chemical Technology, 3rd Ed., Vol. 14 , pg 414 - 421 (1981). Auch die Polymeren mit mesogenen Seitengruppen fanden in jüngster Zeit starke Beachtung (Vgl. S. B. Clough, A. Blumstein & E.C. Hsu, macromolecules 9 , 123 (1976); V. N. Tsekov et al. Europ. Polymer I. 9 , 481 (1973); L. Strzelecky & L. Libert, Bull. Soc. Chim. France 297 (1973); H. Finkelmann in "Polymer Liquid Crystals", Academic Press, 1982; J. Frenzel, G. Rehage, Macromol. Chem 184 , 1689 - 1703 (1983; Makromol, Chem. Rapid Commun. 1 , 129 (1980); D. Hoppner, J. H. Wendorff, Die Angewandte Makromolekulare Chemie 125 , 37 - 51 (1984). DE-A 27 22 589, DE-A 28 31 909, DE-A 30 20 645, DE-A 30 27 757, DE-A 32 11 400, EU-A 90 282.

Aus der US-A 4 293 435 ist eine technische Nutzung des spezifischen Verhaltens der flüssigkristallinen Polymere, das mit dem Übergang in den Glaszustand verbunden ist, bekannt. Dabei wird durch Anwendung von Bedingungen, die in definierter Weise Anordnung und Orientierung der flüssigkristallinen Polymeren verändern (wie z. B. elektrisches und magnetisches Feld bzw. Druck) Information gespeichert. Dieser Stand der Technik wird in der GB-A 2 146 787 diskutiert. Es wird darauf hingewiesen, daß die in der US-A vorgesehene Lagerung der Vorrichtung im Festzustand unterhalb Glastemperatur ($T_g$) bedeutet, daß $T_g$ oberhalb der üblichen Raumtemperatur ($T_a$) liegt, d. h. daß das Polymersystem bei Temperaturen zur Anwendung kommt, die in der Größenordnung von 100 °C über $T_a$ liegen, will man innerhalb vernünftiger Zeiten die Information aufnehmen. Solche Temperaturen seien unhandlich und brächten auf längere Sicht einen Abbau des Polymeren mit sich. Diese Schwierigkeiten lassen sich nach der GB-A vermeiden, wenn man bestimmte polymere Seitenketten-Flüssigkristalle verwendet. Dann ist es nicht länger notwendig,zur Aufbewahrung der Vorrichtung einen Temperaturbereich unterhalb der $T_g$ einzuhalten, sondern eine stabile Speicherung über viele Jahre hinweg soll bei Temperaturen oberhalb $T_g$ und unterhalb einer Temperatur ($T_f$), bei der das Polymermaterial flüssig zu werden beginnt möglich sein.

Die Bestimmung der $T_f$ kann durch Verfolgung des Lichtdurchgangs durch ein flüssigkristallines Polymer zwischen zwei gekreuzte Polarisationsfiltern mit ab Glastemperatur ansteigender Temperatur vorgenommen werden. Einige Grade unterhalb des smektisch-isotropen Phasenübergangs steigt die Lichtdurchlässigkeit plötzlich an. Dieser Anstieg rührt vom Übergang eines anisotropen aber wenig durchlässigen zu einem hochgradig doppelbechenden, durchlässigen Zustand des Bereichs her. Der Temperaturbereich oberhalb dieser Temperatur $T_f$ wird als "flüssiger Bereich" (fluid region) bezeichnet. Mit steigender Temperatur steigt auch die Lichtdurchlässigkeit an, bis sie bei einer $T_m$ ihr Maximum erreicht. Die $T_m$ markiert den Punkt, an dem die isotrope (Klar-)Phase zuerst auftritt.

Da das Auftreten der isotropen Phase bei gekreuzten Polarisatoren zu einer Extinktion des Lichts führt, bringt eine weitere Temperaturerhöhung einen Abfall des Lichtdurchtritts in dem Maße mit sich, wie die isotropen Bezirke in der Größe anwachsen, bis die sogenannte Klärtemperatur ($T_c$) erreicht ist, bei der die letzten Reste der für die Doppelbrechung verantwortlichen Struktur verschwunden sind.

In der GB-A 2 146 787 wird eine Vorrichtung beansprucht mit einer Materialschicht, die ein flüssigkristallines Polymeres mit mesogener Seitenkette enthält, sowie Einrichtungen zum thermischen Überführen mindestens eines Teils des Materials aus dem viskosen Zustand, bei dem sich die Temperatur des Materials im Bereich $T_g$ bis $T_f$ befindet, in den flüssigen Bereich und Einrichtungen zur Beeinflussung mindestens eines Teils des Materials im flüssigen Bereich, womit man eine selektive Veränderung in der Textur der Moleküle im Material hervorruft und dadurch Information eingibt, die auch nach Abkühlung des flüssigen Bereichs und Rückkehr in den viskosen Zustand erhalten bleibt. Für die GB-A ist es somit eine essentielle Voraussetzung, Polymermaterial zu verwenden für das gilt: $T_f > T_a > T_g$. Ferner wird eine Vorrichtung b schrieben, in der die Materialschicht ein flüssigkristallines Polymer mit einer smektogenen Seitenkette enthält. Besonders bevorzugt sind polymere Flüssigkristalle vom Polysiloxan-Typ mit Diphenylcyan-Seitenketten oder Benzoesäureester-Seitenketten.

## Aufgabe und Lösung

Nach wie vor besteht ein großes Interesse an optischen Speichermedien, die neben hohen Aufzeichnungsdichten auch die Möglichkeit zur reversiblen Speicherung besitzen. Die vorstehend erläuterten Lösungen des Problems der optischen Datenspeicherung stellen relativ eng begrenzte technische Lösungen dar. So beruht die Vorrichtung gemäß der GB-A auf der Anwendung von flüssigkristallinen Seitenkettenpolymeren mit der essentiellen Voraussetzung, daß die Temperatur so ausgewählt wird, daß das Polymermaterial in einem viskosen Zustandsbereich gehalten wird. Die differenzierte Offenbarung erstreckt sich auf PolysiloxanFlüssigkristalle, vorzugsweise mit Diphenylcyan- oder Benzoesäureester-Seitenketten. Die Stabilität der eingespeicherten Information ist sowohl wegen der vorhandenen Molekülbeweglichkeit und der endlichen Relaxationszeiten als auch durch die Möglichkeit der Beeinflussung des Systems z.B. durch Störfelder nicht eindeutig gewährleistet. Zu wunschen wären weiterhin technische Lösungen, deren Realisierung innerhalb eines nicht zu engen Spielraums durchführbar sein sollte.

Es wurde nun gefunden, daß eine besonders günstige Form der optischen Datenspeicherung erreicht werden kann durch das erfindungsgemäße Verfahren.

Das erfindungsgemäße Verfahren stellt ein Verfahren zur reversiblen optischen Informationsspeicherung in einem flüssigkristallinen Speichermedium mit Hauptkettenpolymeren mittels Laserlicht dar, bei dem mittels linear polarisiertem Laserlicht über einen optisch nicht-linearen Effekt aufgrund der positiven Polarisationsanisotropie der verwendeten Flüssigkristalle der selektiv zu einer Variation der räumlichen Orientierung der mesogenen Gruppen in einem Film aus einem flüssigkristallinen Hauptkettenpolymeren führt und eine lokale Änderung des Brechungsindex zur Folge hat, Information in Form eines optisch anisotropen Phasenobjekts eingespeichert wird, wobei sich der Film beim Einspeichern der Information im formstabilen Bereich unterhalb der Glastemperatur $T_g$ der polymeren Flüssigkristalle oder im viskoelastischen Zustand oberhalb der Glastemperatur aber unterhalb des Übergauges von flüssigkristallin in isotrop der polymeren Flüssigkristalle in einer anisotropen Phase befindet.

Zur Ausführung des Verfahrens ist eine Vorrichtung geeignet, die als Speichermedium einen Film aus einem flüssigkristallinen Hauptkettenpolymeren enthält.

Polymere Hauptkettenflüssigkristalle weisen gegenüber Seitenkettenpolymeren den Vorteil höherer Orientierungsordnungsgrade auf, was zu höheren Kontrasten und Beugungseffizienzen führt. Dabei kann die Temperatur des Speichermediums, bei der die Information eingespeichert wird, im Bereich des formstabilen Zustands unterhalb der Glastemperatur Tg des flüssigkristallinen Hauptkettenpolymerisats liegen. Alternativ kann die Temperatur des Speichermediums, bei welcher die Information eingespeichert wird, auch im viskoelastischen Zustandsbereich oberhalb der Glastemperatur Tg des flüssigkristallinen

Hauptkettenpolymerisats liegen. Der so entstandene Bereich wird unterhalb der Glastemperatur Tg eingefroren. Die erzeugten reorientierten Bereiche können als optische Information ausgelesen werden.

Die Anforderungen an die Struktur der flüssigkristallinen Polymere für die verschiednen Orientierungsverfahren sind in der Literatur dokumentiert. So erfordert zum Beispiel eine homöotrope Orientierung im elektrischen Feld eine positive Dielektrizitätsanisotropie für den verwendeten Frequenzbereich. Eine homogene Orientierung hingegen läßt sich häufig durch Begrenzungsoberflächen aus strukturiertem Polyimid erzeugen. Hierfür sind mesogene Gruppen mit anisotroper Form erforderlich.

Vgl. R. Kelker, R. Hatz Handbook of Liquid Crystals Verlag Chemie 1981. Vgl. Pranoto, W. Haase Mol. Cryst. Liq. Cryst. 98 , 299 - 308 (1983) R. Zentel, R. Ringsdorf, Makromol. Chem. 182, 1245-1256 (1982) Vgl. Liquid Crystals and Ordered Fluids, A Griffin, J.F Johnsen Vol. 4 , Plenum Press , New York 1984.

## Die flüssigkristallinen Polymeren

Die erfindungsgemäß verwendbaren flüssigkristallinen Hauptkettenpolymeren FHP gehorchen im allgmeinen dem Prinzip, daß die Ketten aus relativ starren, mesogenen Gruppen und flexiblen Spacergruppen aufgebaut sind. Dabei werden die starren und flexiblen Gruppen sich im allgemeinen regelmäßig entlang der Kette abwechseln.

Es kann jedoch in vielen Fällen vorteilhaft sein, das Bauprinzip so zu variieren, daß Spacergruppen unterschiedlicher Länge bzw. unterschiedliche mesogene Gruppen die Kette aufbauen, wobei das Auftreten dieser Struktureinheiten regelmäßig oder ungeordnet entlang der Kette erfolgt (vgl. "Stand der Technik").

Der Verknüpfungsmechanismus ist im allgemeinen der der Kondensation (Polykondensation).

Von besonderem Interesse sind die Polykondensationsprodukte.

## Typ Polyester

A. Eines, die mesogene Einheit enthaltenden Diols (I)

$$HO - M - OH \qquad (I)$$

worin M die mesogene Einheit darstellt mit einer aliphatischen Dicarbonsäure

$$HOOC - (CH_2)_n - COOH \qquad (II)$$

worin n für eine Zahl von 2 bis 20 steht, als Spacer.

Die mesogenen Einheiten M gehen im wesentlichen auf die freien niedermolekularen Mesogene des Standes der Technik zurück.

Vorzugsweise enthalten die mesogenen Einheiten M zwei Phenylreste, die direkt oder über eine Brücke miteinander verbunden sind, gemäß folgender Formel (III)

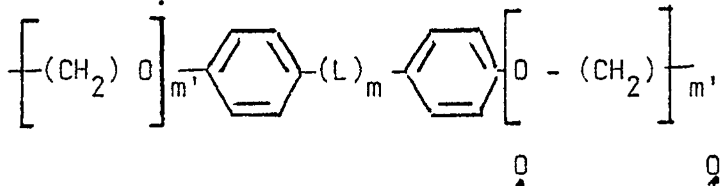 (III)

worin L für die Reste $-CH=N-$; $-N=N-$; $-N=\overset{\overset{O}{\uparrow}}{N}-$; $-CH=\overset{\overset{O}{\uparrow}}{N}-$;

$-CH=CH-$; $-C\equiv C-$, $-\underset{\underset{O}{\|}}{OC}-$ $\quad -HC=\underset{\underset{CH_3}{|}}{C}-$, $-\underset{\underset{CH_3}{|}}{CH}=N-N=\underset{\underset{CH_3}{|}}{CH}-$

oder für eine Phenylengruppe und m und m' für Null oder Eins steht und gegebenenfalls eine oder beide Phenylreste mehrheitlich symmetrisch mit Methylgruppen oder Halogen wie Chlor, Brom etc. substituiert sein können.

B. eine, die mesogene Einheit enthaltende Dicarbonsäure (IV)

$$HOOC - M' - COOH \qquad (IV)$$

worin M' die gleiche Bedeutung wie M gemäß Formel (II) besitzt, mit der Maßgabe, daß m' in der Regel für Null steht,
mit einem aliphatischen Diol der Formel (V)

$$OH - A - OH \qquad (V)$$

worin A eine, gegebenenfalls mit $C_1$ - $C_2$ - Alkylresten substituierte, gegebenenfalls durch einen oder mehrere Ethersauerstoffatome unterbrochene Alkylkette mit 2 bis 20 Kettengliedern bedeutet.

C. Eines, die mesogene Einheit enthaltenen Diisocyanats (VI)

$$O = C = N - M'' - N = C = O \qquad (VI)$$

worin M" die gleiche Bedeutung wie M gemäß Formel I besitzt, vorzugsweise die Bedeutung

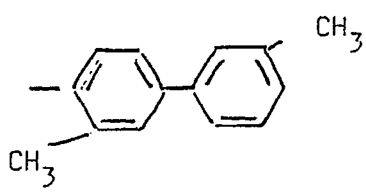

mit dem aliphatischen Diol der Formel (V).

D. Eines Bisphenolderivats der Formel (VII)

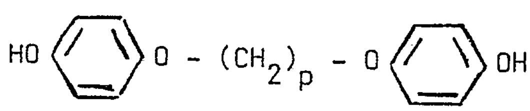

(VII)

worin p für eine Zahl von 2 bis 20, vorzugseise von 2 bis 12 steht, oder eines (substituierten) Hydrochinons (VIII)

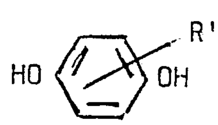

(VIII)

worin R' für Methyl, Phenyl, Chlor oder Brom steht, oder einer Phenylverbindung oder eines Diols der Formel I, insbesondere wenn m und m' für Null steht, bzw. einer Verbindung (IX)

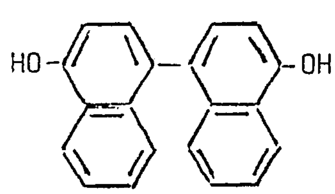

(IX)

mit der Terephthalsäure oder einer Diphenyldicarbonsäure der Formel (X)

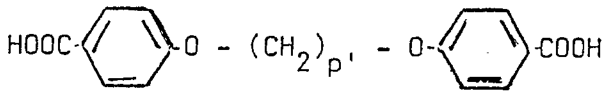

(X)

wenn p′ für eine Zahl von 2 bis 20, vorzugsweise 2 bis 12 steht.

E. Eines Dianilins der Formel (XI)

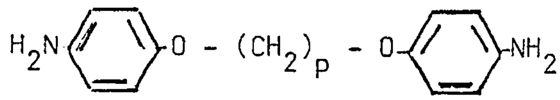

(XI)

worin p die oben bezeichnete Bedeutung besitzt mit Terephthalaldehyd zu einer Schiffschen Base.

Neben den bereits ausführlich besprochenen chemischen Strukturen führen z. B. auch die folgenden zur Ausbildung flüssig-kristalliner Phasen:

Typ Polyesteramid

beispielsweise der Struktur

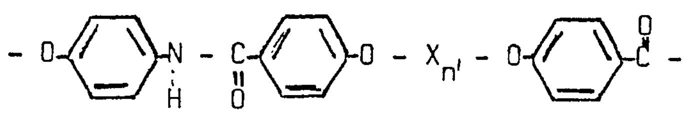

worin $X_{n'}$ für flexible Spacer-Einheiten der Länge n′ steht (n′ = 2 bis 20) oder vom

Typ Polysiloxane

beispielsweise der Struktur

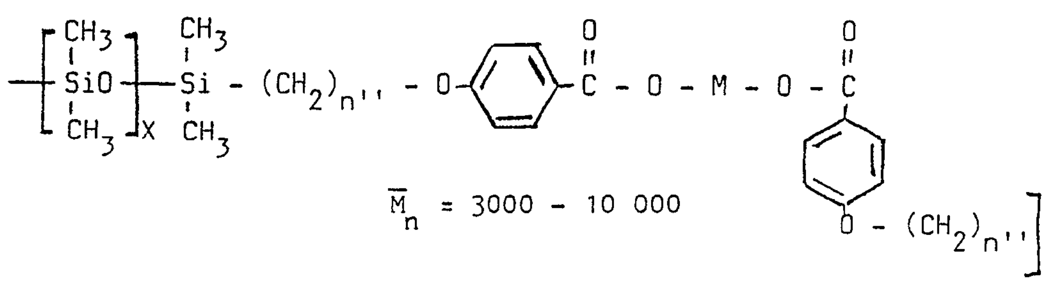

$\bar{M}_n$ = 3000 - 10 000

worin M für eine mesogene Gruppe und n" für eine Zahl analog n * steht, sowie Polymere, die aus Scheibchenförmigen mesogenen Gruppen und flexiblen Gruppen aufgebaut sind.

[Vgl. I. Watanabe, W.R. Krigbaum J. Polym. Sci, Polym. Phys. Ed. 23 565 - 574 (1985); A. Blumstein Polym. J. 17 , 277 - 288 (1985); S. B. Clough, A. Blumstein, E.C. Hso Macromolecules 9 , 123 - 127 (1976); C. Noel, F.L.Laupretre, C. Friedrich, B. Fayolle, L. Bosio Polymer 25 , 808 - 814 (1984); R. W. Lenz Polym. J. 17 , 105 - 155 (1985)]

Die Durchführung der Polykondensation geschieht in an sich bekannter Weise. Bei den Veresterungsreaktionen gemäß den Typen A. und B. können zur Einstellung des Estergleichgewichts saure oder basische Katalysen angewendet werden, wie z. B. durch starke Säure (p-Toluolsulfonsäure), Metalloxide, Alkali oder Erdalkalisalze schwacher Säuren oder Alkoholate. Die Polymerisation kann gegebenenfalls auch in der

* und X für eine Zahl von 2 - 40 steht.

Schmelze vorgenommen werden.
Im allgemeinen liegen die Molgewichte der Polykondensate im Bereich von 1 000 bis 20 000.
(Bestimmung erfolgt durch Gelpermeationschromatographie)
Die Glastemperatur ($T_g$) der erfindungsgemäß verwendeten, flüssigkristallinen Polymeren liegt im allgemeinen im Bereich zwischen -40°C und 110°C. (Zur Glastemperatur $T_g$ vgl. I. Brandrup and E.H. Immergut, Polymer Handbook, 2nd Ed. III - 139, J. Wiley, 1975).

Die Vorrichtung

Die Vorrichtung entspricht primär den im Hauptanspruch und vorstehend (Vgl. Aufgabe und Lösung) aufgestellten Merkmalen. Das für den Informationsspeicherprozeß vorgeschlagene flüssigkristalline Hauptkettenpolymer ist in seinem Absorptionsverhalten auf die Wellenlänge des Schreiblasers anzupassen. Dies kann z. B. geschehen entweder durch Zumischen eines geeigneten Farbstoffs oder durch Einpolymerisieren desselben in die Polymerkette. Dabei kann das Farbstoffmolekül selbst mesogenen Charakter aufweisen. Vorzugsweise kann ein polymerer Flüssigkristall eingesetzt werden, dessen mesogene Gruppen selbst im geforderten Wellenlängenbereich absorbieren, der also dem Extremfall eines zu 100 % einpolymerisierten mesogenen Farbstoffs entspricht. Die erforderliche Extinktion des Speichermediums wird über die Farbstoffkonzentration eingestellt.

Geeignete Farbstoffe sind aus der Literatur bekannt. Als geeignete Farbstoffe zum Einmischen in die flüssigkristalline Phase werden solche genannt, die eine Reihe von Bedingungen erfüllen. (Vgl. z. B. J. Constant et al., J. Phys.D: Appl. Phys. Vol. 11 . S. 479 ff (1978) F. Jones et al. Mol. Cryst. Liq. Crstal, Vol. 60 , S. 99 ff, 1980, EP-A 43 904, EP-A 55 838, EP-A 65 869. Die Farbstoffe sollen unter der Wirkung eines elektr. Feldes nicht ionisieren, sollen einen möglichst hohen molekularen Extinktionskoeffizienten und gleichzeitig eine gute Löslichkeit in der verwendeten Flüssigkristallmatrix (d.h. dem Speichermedium) haben und müssen chemisch/photochemisch stabil sein. Farbstoffe mit entsprechenden Eigenschaften finden sich z. B. in der Klasse der Anthrachinone (Vgl. EP-A 56 492, EP-A 44 893, EP-A 59 036, EP-A 54 217).
Geeignete Azofarbstoffe werden z. B. in der DE-A 34 06 209 angegeben. Der Anteil der Farbstoffe an dem Speichermedium liegt vorteilhafterweise im Bereich 1 bis 50 Gew.-%.

Polymere mit mesogenen Gruppen und Farbstoffresten in den Seitenketten sind Gegenstand der EP-A 7 574, EP-A 90 282, EP-A 1 40 133 vgl. auch H. Ringsdorf, H.W. Schmidt Makromol. Chem. 185 , 1327 - 1334 (1984); B. Reck, H. Ringsdorf Makromol. Chem. Rapid Commun. loc. cit. Analog den vorstehend erläuterten polymeren Flüssigkristallen PFK der Formel I können repetierende Einheiten

$$-A-B-$$

die Hauptkettenelemente der farbstoffhaltigen Monomereinheiten bilden.
Die entsprechenden Monomeren A' = B' - X - Y' enthalten demnach den Farbstoffrest in der Gruppe Y'.

Als Beispiel einer mesogenen Gruppe M, die gleichzeitig einen Farbstoffrest darstellt sei die Gruppe

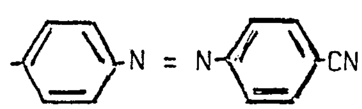

genannt. Vorteilhaft ist gleichzeitig eine Spacergruppe $-(CH_2)_6-$.
Das Polymer kann im Prinzip in Form einer dünnen Schicht (Film) oder eines Laminats, als Beschichtung einer festen oder biegsamen Matrixschicht angewendet werden. Die Dicke des die polymeren Flüssigkristalle enthaltenden bzw. daraus bestehenden Films liegt vorteilhafterweise im Bereich $10^{-3}$ bis $10^{-6}$ m. In der hier angeführten Ausbildung (Vgl. Fig. 1 ) umfasst die erfindungsgemäße Vorrichtung eine Registrierzelle (1), bestehend aus zwei planparallel angeordneten transparenten Platten (2), vorzugsweise Glasplatten im geeigneten Abstand, im allgemeinen unterhalb 1 mm, vorzugsweise bei ca. 10 µm. Die Grundfläche beträgt einige $cm^2$ bis $dm^2$. Die beiden Innenflächen der Glasplatten (2) waren mit $InO_2/SnO_2$ leitfähig bedampft und leitender Kontakt nach außen war hergestellt worden. Die derart präparierten Glasplatten (2) wurden mit Hilfe eines temperaturstabilen Klebers, beispielsweise eines Silikonklebers so aneinander fixiert, daß ein zellenartiger leerer Innenraum mit jeweils nur einem Einlaß und Auslaß von einigen mm Breite gebildet wird. Der gewünschte Abstand der beiden Glasplatten (2) wird dabei durch zwei geeigenete Abstandshalter (3) der passenden Abmessung, vorzugsweise aus Polyimid-Kunststoff,fest eingestellt. Die Registrierzelle weist

weiterhin Elektroden (4) auf. Nach Antrocknen des Klebers wird die Zelle auf einer heizbaren Einrichtung mit dem im isotropen Zustand befindlichen, flüssigkristallinen Polymeren, vorzugsweise der Formel I gefüllt. Durch Kapillarwirkung bedingt füllt sich so der noch freie Zellenraum vollständig mit der Polymerschmelze.

Der Vorteil des Vorgehens gegenüber der Verwendung einer noch teilweise offenen Zelle liegt u. a. darin, daß der Einschluß von Luftblasen zuverlässig verhindert wird. Auß erdem können so mit geringem Aufwand standardisierte Zellen-Rohlinge mit innerhalb gewisser Grenzen variabler Geometrie (Außenabmessungen, Distanzen) hergestellt werden, die (vgl. Fig. 1 ) dann bei Bedarf in einem zweiten Schritt in angegebener Weise mit den entsprechenden flüssigkristallinen Polymeren befüllt werden können. Die Orientierung erfolgt in an sich bekannter Weise durch Anlegen eines orientierten Felds (alignment field), insbesondere eines magnetischen und speziell eines elektrischen Felds oder über Oberflächeneffekte. Ebenso kann die erforderliche Orientierung durch geeignetes Scheren oder Verstrecken erzeugt werden. Im Falle der (bevorzugten) Anwendung des elektrischen Feldes wird an die so gefüllte Registrierzelle (1) bei Temperaturen von oberhalb $T_g$ (Definition siehe oben) eine Wechselspannung angelegt und unter Beibehaltung der angelegten Spannung auf Zimmertemperatur abgekühlt. Es resultiert ein orientierter Flüssigkristallfilm.

Die Glastemperatur $T_g$ des flüssigkristallinen Polymeren liegt über der Raumtemperatur $T_a$. Als Raumtemperatur sei eine Temperatur von 20 °C angenommen. Das Auslesen der Information kann durch Beleuchten des Polymerfilms mit monochromatischem kohärentem Licht erfolgen. Zur Einspeicherung der Information sind verschiedene Orientierungsmöglichkeiten des flüssigkristallinen Polymerfilms in der erfindungsgemäßen Vorrichtung (vgl. fig. 1) möglich:

1) Die mesogenen Gruppen werden parallel zur Flächennormale der polymeren Filmschicht einheitlich ausgerichtet. Dies kann durch Anlegen eines elektrischen Wechselfeldes an die mit (transparenten) Elektroden beschichteten Platten (2), wobei das elektrische Feld parallel zur Normale der polymeren Filmschicht liegt , durch Anlegen eines Magnetfeldes oder durch Oberflächenbehandlung geschehen.

2) Die mesogenen Gruppen werden parallel oder zur Filmebene gekippt und parallel zu einer makroskopisch vorgegebenen Richtung orientiert. Dies kann entweder durch Beschichtung der Platten (2) mittels eines geeigneten Materials wie Polyimid und durch Strukturieren dieser Beschichtung entlang der gewünschten Vorzugsorientierung oder durch geeignete Schrägbedampfung der Substrate mit Siliziumoxid geschehen.

Ebenso kann die erforderliche Orientierung durch geeignetes Scheren oder Verstrecken erzeugt werden.

In beiden Fällen 1) und 2) erfolgt die Orientierung im flüssigkristallinen Zustand.

Die Orientierung wird durch Abkühlen in den Glaszustand eingefroren. Die wie oben angegeben hergestellte Registrierzelle (1) bildet das eigentliche Speichermedium für das Einspeichern optischer Information. Das Verfahren basiert im allgemeinen auf der lokalen, selektiven Variation des Ordnungszustands der polymeren Flüssigkristallmoleküle in einem diese enthaltenden Speichermedien.

Der im Speichermedium enthaltene Flüssigkristallfilm kann in makroskopisch orientierter oder desorientierter Form vorliegen. Die Variation des Ordnungszustands kann durch lokale elektrische, magnetische oder oberflächenwirksame Felder geschehen. Dabei kann das Speichermedium lokal oder insgesamt mit der Wärmequelle erwärmt werden. Wenn die Wärmequelle selektiv lokal wirkt, kann die Variation des Ordnungszustands durch eine über die gesamte Dimension des Speichermediums hinweg wirkendes elektrisches, magnetisches oder oberflächenwirksames Feld induziert werden. Besonders vorteilhafte Anwendungen basieren auf dem Streuzentreneffekt und nichtlinearen optischen Effekt (optisch induzierter Frederiks-Übergang).

- Nicht-linearer optischer Effekt (Optisch-induzierte Frederiks-Transition)

Das elektrische Feld der linear polarisierten Laser-Schreiblichtquelle induziert aufgrund der positiven Polarisierbarkeitsanisotropie von Flüssigkristallmolekülen eine lokale Modulation des Brechungsindex, die als Phasenobjekt durch einen zweiten Laserstrahl (linear polarisierte Welle eines Helium-Neon-Lasers) ausgelesen werden kann. Erreicht wird dies durch eine gezielte lokale **Reorientierung** der Flüssigkristallmoleküle im optischen Feld. Die Reorientierung (optisch induzierte Frederiks-Transition) erfolgt dabei oberhalb der Glastemperatur $T_g$ des flüssigkristallinen Polymeren in einer anisotropen Phase. Bei nachfolgendem Abkühlen friert die Brechungsindex-Struktur unterhalb $T_g$ als Phasenobjekt ein. Der Film kann dabei visuell völlig klar bleiben.

Die Temperatureinstellung kann extern durch Heizen erfolgen, wobei dann der Frequenz der Schreibwelle keine entscheidende Bedeutung zukommt. Vorzugsweise geschieht die Einstellung der Temperatur durch

Absorption der Schreibwelle; die Abkühlung erfolgt beim Abschalten des Lasers. Dabei sollte die Schreibwelle zwei Bedingungen gleichzeitig erfüllen:

$\alpha$) Die optische Feldstärke an den Interferenzmaxima muß oberhalb der "Frederiks threshold voltage" für das gewählte flüssigkristalline Polymer liegen.

$\beta$) Die Intensität muß so gewählt werden, daß durch Absorption eine Temperaturerhöhung an den Interferenzmaxima derart erfolgt, daß das Polymer über die Glastemperatur, jedoch **nicht** über die Temperatur des Phasenübergangs nematisch → isotrop ($T_{NI}$) erwärmt wird.

Durch geeignete Abstimmung von Laserwellenlänge und flüssigkristallinen Polymeren sind neben reiner Binärinformation (maximal mögliche Reorientierung) verschiedene Reorientierungsgrade möglich, was einer kontinuierlichen Phasenmodulation entspricht.

Ein industriell äußerst interessanter Aspekt des vorliegenden Verfahrens ist darin zu sehen, daß es gelingt ein Phasenobjekt mit hohen Beugungseffizienzen zu erzeugen, wie es für die optische Analogtechnik von entscheidender Bedeutung ist (Konventionelle Holographie, synthetische Holographie).

Der Versuchsaufbau zur Beurteilung der Speichereigenschaften der Beschriebenen Registrierzelle basiert auf einem Mach-Zehnder-Interferometer (vgl. Encyclopädie Naturwissenschaft und Technik Bd. 2, Verlag Moderne Industrie, 1980). Hiermit lassen sich durch Überlagerung zweier linear polarisierter ebener Teilwellen sinusförmige Intensitätsgitter mit Strichabständen zwischen 100 $\mu$m und 1,0 $\mu$m erzeugen. In Verbindung mit einer Konvexlinse wird durch Überlagerung einer Ebene mit einer Kugelwelle die Intensitätsverteilung analog einer Fresnel'schen Zonenplatte realisiert.

## Löschen der eingspeicherten Information

Grundsätzlich kann die eingespeicherte Information durch Temperaturerhöhung (über $T_{NI}$) und Abkühlen im elektrischen oder magnetischen Feld wieder gelöscht werden. Das Löschen von eingespeicherter Information kann lokal durch Temperaturerhöhung und nachfolgende Abkühlung im elektrischen oder magnetischen Feld unter Wiederherstellung des ursprünglichen Orientierungszustands im lokalen Bereich wiederhergestellt werden. Alternativ kann auch die gesamte eingegebenen Information gelöscht und der Urzust and wiederhergestellt werden, indem man die Temperatur des Speichermediums erhöht und im elektrischen oder magnetischen Feld abkühlt.

Vorteilhaft wird dabei wie folgt vorgegangen:
Analog der Vorbereitung für den ersten Einschreibvorgang wird die in den flüssigkristallinen Polymeren eingespeicherte Information durch Aufheizen der Registrierzelle (1) über $T_g$ und nachfolgendes Abkühlen bei angelegter Wechselspannung (Richtwerte 500 V, $\nu$ = 1 Khz) gelöscht. Nachdem der Einschreib- und Löschvorgang mehrfach wiederholt worden war, stand fest, daß bei keinem der durchgeführten Schritte irreversible Veränderungen an der Registrierzelle auftreten.

## Reversible analoge Datenspeicherung

(Vgl. Abbildung 1 - 4)
Wie bereits ausgeführt, bietet die Anwendung des nicht-linearen optischen Effekts die Möglichkeit auf optischem Wege Daten analog zu speichern, sie auf optischem Wege zu lesen, bei Bedarf wieder zu löschen und wiederholt Daten einzuschreiben. Die Datenspeicherung erfolgt mittels holographischer Methoden in dem erfindungsgemäßen Speichermedium. In der Regel betrifft die zu speichernde Information abbildungsfähige materielle Strukturen, z. B. Gegenstände oder zweidimensional organisierte Gegenstände wie Druckseiten oder graphische Gebilde. Hierzu wird die zu speichernde Struktur mittels einer kohärenten, monochromatischen Lichtquelle beleuchtet. Das Interferenzmuster, das durch Richtung, Amplitude und Phasenlage des von der zu speichernden Struktur gestreuten Lichts relativ zu einer von derselben Lichtquelle stammenden Referenzlichtwelle bestimmt wird, wird in dem vorteilhaft makroskopisch orientierten Film aus flüssigkristallinem Polymer holographisch registriert und gespeichert. (Vgl. Das Speichermedium). Die Stärke des flüssigkristallinen Polymerfilms liegt vorteilhaft auch hier zwischen 1 und 20 $\mu$m. Die planparallelen, transparenten Platten können aus durchsichtigen Kunststoffen wie PMMA oder vorzugsweise aus anorganischen Gläsern hergestellt sein.

Vorteilhafterweise befinden sich im Speichermedium Farbstoffe. Die Farbstoffmoleküle können dabei Bestandteile des flüssigkristallinen Polymeren sein oder sie können dem Speichermedium beigemischt und darin verteilt sein. Die Glastemperatur $T_g$ des flüssigkristallinen Polymeren liegt über der Raumtemperatur $T_g$. Das Auslesen der Information kann durch Beleuchten des Polymerfilms mit monochromatischem

kohärentem Licht erfolgen. Zur Einspeicherung der Information sind verschiedene Orientierungsmöglichkeiten des flüssigkristallinen Polymerfilms in der erfindungsgemäßen Vorrichtung (vgl. Fig. 1) möglich:

1) Die mesogenen Gruppen werden parallel zur Flächennormale der polymeren Filmschicht einheitlich ausgerichtet. Dies kann durch Anlegen eines elektrischen Wechselfeldes an die mit (transparenten) Elektroden beschichteten Platten (2), wobei das elektrische Feld parallel zur Normale der polymeren Filmschicht liegt, durch Anlegen eines Magnetfeldes oder durch Oberflächenbehandlung geschehen.

2) Die mesogenen Gruppen werden parallel oder zur Filmebene gekippt und parallel zu einer makroskokpisch vorgegebenen Richtung orientiert. Dies kann entweder durch Beschichtung der Platten (2) mittels eines geeigneten Materials wie Polyimid und durch Strukturieren dieser Beschichtung entlang der gewünschten Vorzugsorientierung oder durch geeigneter Schrägbedampfung der Substrate mit Siliziumoxid geschehen. *)

In beiden Fällen 1) und 2) erfolgt die Orientierung im flüssigkristallinen Zustand.

Die Orientierung wird durch Abkühlen in den Glaszustand eingefroren.

Die Speicherung erfolgt in der oben beschriebenen Weise, wobei als monochromatische Lichtquelle ein Laser verwendet wird, dessen Wellenlänge im Absorptionsbereich des Speichermediums liegt. Ausgelesen wird mittels eines Lasers, dessen Wellenlänge in viel geringerem Maße vom Speichermedium absorbiert wird. Das Einspeichern und Auslesen kann dabei bei Zimmertemperatur am festen Film erfolgen. Die Löschung der Information erfolgt durch Aufheizen der Probe in dem anisotropen oder isotropen Bereich oberhalb der Glastemperatur $T_g$.

## Reversible digitale Datenspeicherung

Eine andere Ausgestaltung der Erfindung betrifft die digitale Datenspeicherung auf optischem Wege, wobei auch hier das Auslesen auf optischem Wege, das Löschen und Wiedereinschreiben von Information vorgesehen ist. Dabei wird in dem optisch klaren, vororientierten flüssigkristallinen Polymerfilm des Speichermediums mittels eines monochromatischen Laserstrahls eine digitale Phasenstruktur erzeugt. Laserstrahl und Speichermedium werden in definierter Weise relativ zueinander bewegt und die Intensität des Laserstrahls moduliert. Das Auslesen der gespeicherten Information erfolgt durch definierte relative Bewegung des Speichermediums und eines Laserstrahls konstanter Intensität und geeigneter Wellenlänge, der die eingespeicherte Information unbeeinflußt läßt.

Die technische Vorbereitung des Speichermediums (Ausrichtung der Polymeren) geschieht analog der reversiblen analogen Datenspeicherung. Die Speicherung erfolgt in der oben beschriebenen Weise, wobei als monochromatische Lichtquelle ein Laser verwendet wird, dessen Wellenlänge im Absorptionsbereich des Speichermediums liegt. Ausgelesen wird mittels eines Lasers, dessen Wellenlänge in viel geringerem Maße von dem verwendeten Speichermedium absorbiert wird. Das Einspeichern und Auslesen kann dabei bei Zimmertemperatur am festen Film erfolgen. Die Löschung der Information erfolgt durch Aufheizen der Probe in den anisotropen oder isotropen Bereich oberhalb der Glastemperatur $T_g$.

## Reversible synthetische Holographie

Hierbei wird in der oben (für die reversible digitale Datenspeicherung) beschriebenen .Weise auf digitalem Wege, durch definierte Relativbewegung von Schreibstahl und Speichermedium, eine Phasenstruktur in einem vororientierten Flüssigkristall-Kunststoffilm erzeugt. Die Reproduktion erfolgt nun **nicht** wie im Fall der digitalen Speicher durch definierte Relativbewegung von Lesestrahl und Speichermedium, sondern durch vollständigs Ausleuchten des synthetischen Hologramms mit einer Referenzwelle. Die notwendige Information zur Ermittlung der erforderlichen Intensitätsmodulation ist vorher rechnerisch zu ermitteln. Das beschriebene Verfahren ermöglicht die Herstellung von Phasenstrukturen mit definierten optischen Eigenschaften, wie z. B. Linsen u. a.. Da dies rechnerisch in digitaler Form geschieht, können komplizierte Verarbeitungsprozesse (Glasschliff, Politur) erheblich vereinfacht werden. Sehr wesentlich ist auch das geringe Gewicht der auf dieser Weise hergestellten optischen Komponenten (Brillengläser, Linsen).

*) Ebenso kann die erforderliche Orientierung durch geeignetes Scheren oder Verstrekken erzeugt werden.

Vorteilhafte Wirkung

Das erfindungsgemäße Verfahren und Vorrichtung zur reversiblen optischen Datenspeicherung eignet sich vorzüglich zur Anwendung auf dem Gebiet der reversiblen digitalen Informationsspeicherung (EDRAW).
Eine weitere außerordentlich interessante Anwendungsmöglichkeit eröffnet sich auf dem Feld der analogen Informationsverarbeitung (Holographie). Deren Einsatzgebiet ist vorzüglich in der industriellen Prozeßsteuerung zu erblicken. Mit der optischen Analogtechnik lassen sich wichtige Phasen der Produktkontrolle wie Erkennen, Sortieren und Prüfen auf der Grundlage der kohärent optischen Korrelation sehr schnell und effektiv bewerkstelligen.

Herstellung der flüssigkristallinen Polymeren

Die erfindungsgemäß anwendbaren Polymeren, insbesondere die der Formel I können auf an sich bekannte Weise hergestellt werden: Hingewiesen sei auf:
Als Beispiel sei die Herstellung eines Polyesters PI der Struktur

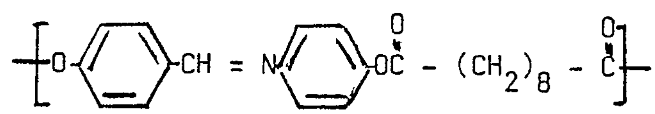

aus der aliphatischen Dicarbonsäure DI

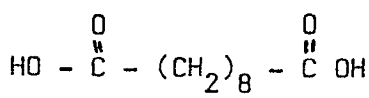

und aus dem Bisphenol BI

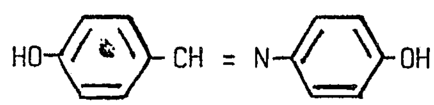

beschrieben: (Vgl. A. Blumstein, K.N. Sivaramakrishnan, R. B. Blumstein, S. B. Clough Polymer 23 , 47 - 53 (1982).
Im Handel erhältliches Sebacylsäurechlorid wird vorteilhaft durch Destillation unter reduziertem Druck gereinigt.
Das Bisphenol BI wird über die Kondensations von 4-Hydroxy-benz aldehyd mit 4-Aminophenol in Methanol erhalten. Das Bisphenol BI wird durch Rekristallisation aus einer Mischung von Aceton und Hexan gereinigt. Zur Herstellung des Polyesters wird ein Lösung bestehend aus der Bisphenol BI, Natriumhydroxid und Benzyltriethylammoniumchlorid in 100 ml Wasser in einem Mischer hergestellt. Unter intensivem Rühren wird der Mischung eine Lösung von Sebacylsäurechlorid in Cloroform zugeführt. Nach 15 minütigem Rühren wird die Mischung in Methanol gegossen. Das ausgefällte Polymere wurde mittels Filterung, Waschen in Wasser gereinigt und bei 70° C im Vakuum getrocknet.
Als weiteres Beispiel sei die Synthese eines Polyesters PII der Struktur

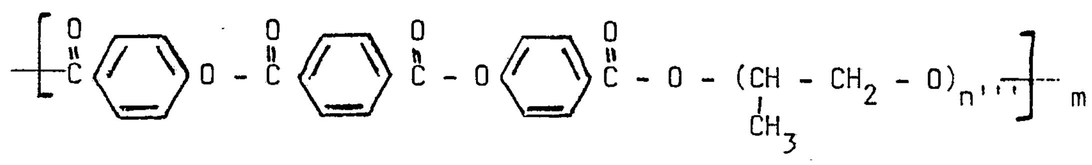

worin n> für eine Zahl von 2 bis 20 steht und m die Anzahl der repetierenden Einheiten angibt, (in der

Regel $10^2$ bis $10^4$) aus der Dicarbonsäure DII

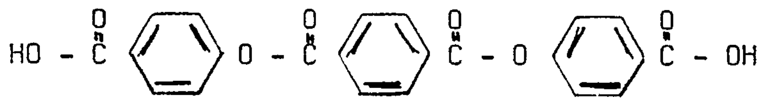

und dem Diol

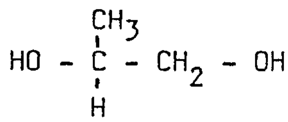

dargestellt. (Vgl. G. Galli, E. Chiellini, Ch. K. Ober, R.W. Lenz Makromol. Chem. 183 , 2693 - 2708 (1982)). Das Reaktionsschema stellt sich wie folgt dar:

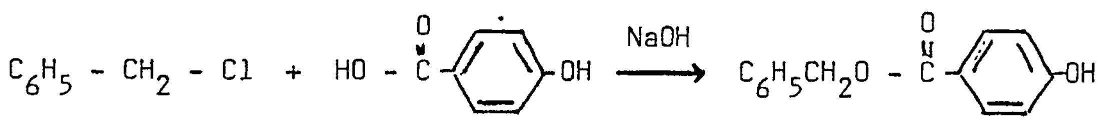


Das so entstandene Phenol wird umgesetzt mit dem Säurechlorid

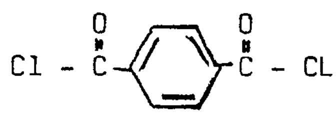

, wobei man die folgende Verbindung enthält:

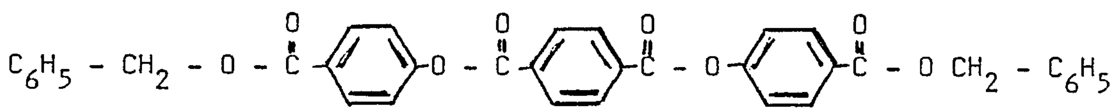

Mit HBr in Trifluoressigsäure erhält man die Dicarbonsäure DII.
Im nächsten Schritt wird DII mit $SOCl_2$ zu dem Säuredichlorid umgesetzt:

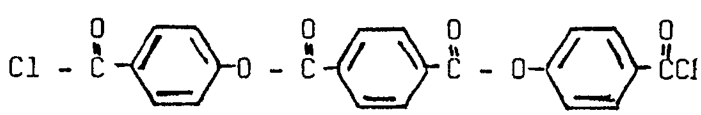

Durch Umsetzung des Säurechlorids mit dem Diol in 1,2-Dichlorethan bei 60 °C mit einem Überschuß an Pyridin als Säure-akzeptor erhält man den Polyester PII.

Als weiteres Beispiel sei die Synthese eines Polyesters PIII der Struktur

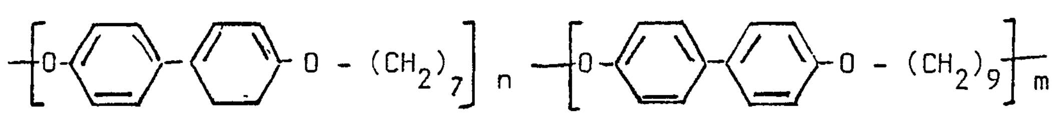

ausgehend von 4,4'-Dihydroxybiphenyl, 1,7-Dibromheptan und 1,9-Dibromnonan beschrieben (Vgl. T. D. Shaffer, V. Percec, I. Polym. Sci. Polym. Lett. Ed. 23 , 185 - 194 (1985)).

Die Ausgangssubstanzen sind im Handel erhältlich. Das 4,4-Dihydroxybiphenyl wird in wässriger NaOH-Lösung einer Lösung von 1,7-Dibromheptan und 1,9-Dibromnonan in Nitrobenzol unter heftigem Rühren zugesetzt. Bei einer Temperatur von 90° C wurde TBAH *
zugefügt und die Reaktion 10 - 12 Stunden lang aufrecherhalten. Dabei gilt folgendes Reaktionsschema:

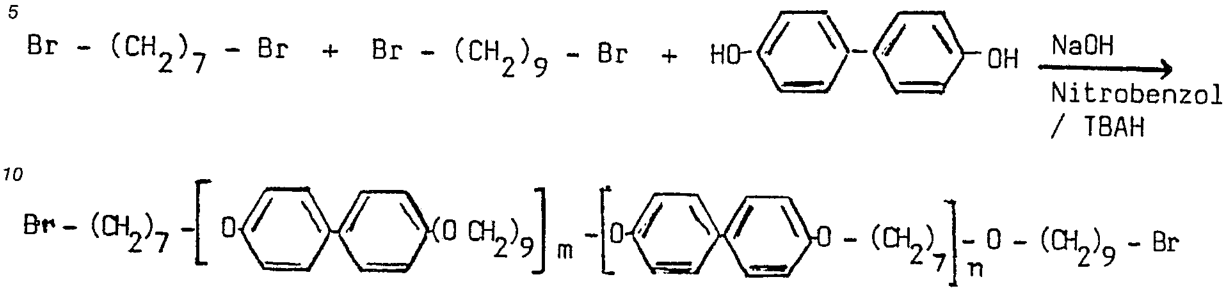


Das Polymer kann durch Aufnehmen und Ausfällen im Methanol gereinigt werden.

Ferner sei als Beispiel die Synthese eines Polysiloxans PIV dargestellt (Vgl. C. Aguilera, J. Bartolin, B. Hisgen, H. Ringsdorf, Makromol. Chem 4 , 253 - 262 (1983)
Diese besitzt die Stuktur:

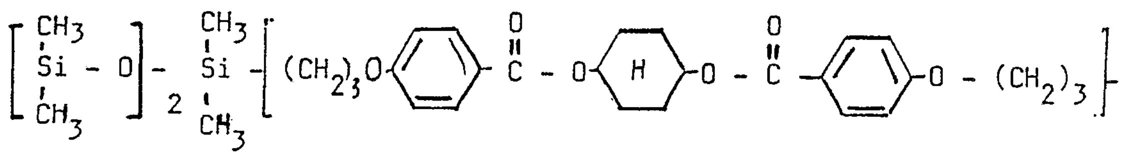

unter Katalyse mit Hexachloroplatinsäure reagieren

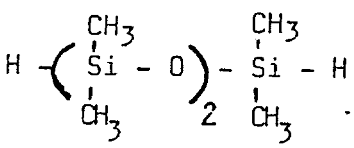
und
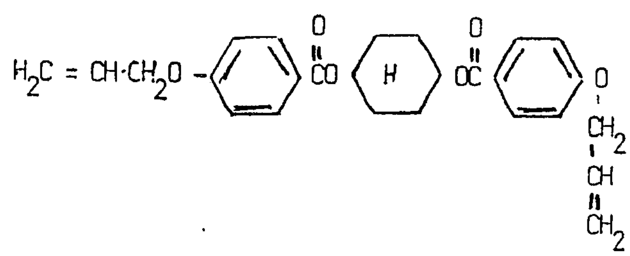

zu dem genannten Polysiloxan. Auf ähnliche Weise erhält man Copolyester mit unterschiedlichen Spacerlängen oder Längen der mesogenen Gruppen.

## Ansprüche

1. Verfahren zur reversiblen optischen Informationsspeicherung in einem flüssigkristallinen Speichermedium mit Hauptkettenpolymeren mittels Laserlicht,
   dadurch gekennzeichnet,
   daß mittels linear polarisiertem Laserlicht über einen optisch nicht-linearen Effekt aufgrund der positiven Polarisationsanisotropie der verwendeten Flüssigkristalle der selektiv zu einer Variation der räumlichen Orientierung der mesogenen Gruppen in einem Film aus einem flüssigkristallinen Hauptkettenpolymeren führt und eine lokale Änderung des Brechungsindex zur Folge hat, Information in Form eines optisch anisotropen Phasenobjektes eingespeichert wird, wobei sich der Film beim Einspeichern der Information im formstabilen Bereich unterhalb der Glastemperatur Tg der polymeren Flüssigkristalle oder im viskoelastischen Zustand oberhalb der Glastemperatur aber unterhalb des Übergauges von flüssigkristallin in isotrop der polymeren Flüssigkristalle in einer anisotropen Phase befindet.

* (Tetrabutylammonium-hydrogensulfat)

2. Verfahren gemäß Anspruch 1, dadurch gekennzeichnet, daß als Speichermedium ein makroskopisch orientierter polymerer Flüssigkristallfilm verwendet wird.

3. Verfahren gemäß Anspruch 1, dadurch gekennzeichnet, daß als Speichermedium ein makroskopisch desorientierter Flüssigkristallfilm verwendet wird.

4. Verfahren gemäß Anspruch 1, dadurch gekennzeichnet, daß die Temperatur des Speichermediums bei welcher die Information eingespeichert wird, im Bereich des formstabilen Zustands unterhalb der Glastemperatur Tg des flüssigkristallinen Hauptkettenpolymerisats liegt und nach Abschalten der Wärmequelle die örtliche Information im Glaszustand des Polymeren fixiert wird.

5. Verfahren gemäß den Ansprüchen 1 bis 4, dadurch gekennzeichnet, daß es eingerichtet ist zum Löschen der eingespeicherten Information, indem lokal per Temperaturerhöhung und nachfolgende Abkühlung im elektrischen oder magnetischen Feld der ursprüngliche Orientierungszustand im lokalen Bereich wieder hergestellt wird.

6. Verfahren gemäß den Ansprüchen 1 bis 4, dadurch gekennzeichnet, daß es eingerichtet ist zum Löschen der eingegebenen Gesamtinformation und Wiederherstellung des Ausgangszustands, in dem die Temperatur des Speichermediums erhöht und im elektrischen oder magnetischen Feld abgekühlt wird.

7. Verfahren gemäß den Ansprüchen 1 und 6, dadurch gekennzeichnet, daß zum Löschen der eingegebenen Gesamtinformation und Wiederherstellung des makroskopisch desorientierten Zustands die Temperatur des Speichermediums über $T_{NI}$ hinaus erhöht und nachfolgend abgekühlt wird.

8. Verfahren gemäß den Ansprüchen 5 und 6, dadurch gekennzeichnet, daß die Temperaturerhöhung in eine anistrope flüssige Phase des verwendeten flüssigkristallinen Polymeren führt.

9. Verfahren gemäß den Ansprüchen 5 und 6, dadurch gekennzeichnet, daß die Temperaturerhöhung in die isotrope Phase des verwendeten flüssigkristallinen Polymeren führt.

10. Verfahren gemäß den Ansprüchen 1 bis 9, dadurch gekennzeichnet, daß das Absorptionsverhalten des Speichermediums so gewählt ist, daß die Information mit einem Laserstrahl geeigneter Wellenlänge und geeigneter Intensität eingespeichert und mit einem anderen Laserstrahl anderer Wellenlänge ohne Störung der gespeicherten Information ausgelesen werden kann.

11. Verfahren gemäß den Ansprüchen 1 bis 10, dadurch gekennzeichnet, daß die Variation des Ordnungszustands durch Anlegen eines elektrischen Felds erreicht wird.

12. Verfahren gemäß den Ansprüchen 1 bis 11, dadurch gekennzeichnet, daß sich der makroskopisch orientierte Film zwischen zwei übereinander angeordneten Platten oder Filmen befindet.

13. Verfahren gemäß den Ansprüchen 1 bis 12, dadurch gekennzeichnet, daß das Speichermedium in seinem Absorptionsverhalten der Emissionswellenlänge des Schreiblasers angepaßt ist.

14. Verfahren gemäß Anspruch 13, dadurch gekennzeichnet, daß das Speichermedium einen in seinem Absorptionsverhalten der Emissionswellenlänge des Schreiblasers angepaßten Farbstoff enthält.

15. Verfahren gemäß Anspruch 13, dadurch gekennzeichnet, daß das flüssigkristalline Polymer durch Einpolymerisieren einer farbstoffhaltigen Comonomereinheit in seinem Absorptionsverhalten der Emissionswellenlänge des Schreiblasers angepaßt ist.

16. Verfahren gemäß den Ansprüchen 10 bis 15, dadurch gekennzeichnet, daß die erforderliche Extinktion des Speichermediums über die Farbstoffkonzentration eingestellt wird.

17. Verfahren gemäß den Ansprüchen 1 bis 16, dadurch gekennzeichnet, daß die Auslesewellenlänge außerhalb des für den Schreibprozeß relevanten Absorptionsmaxiumums des Farbstoffs liegt.

## Claims

1. Process for the reversible optical storage of information in a liquid-crystalline storage medium with main chain polymers using laser light, characterized in that information is stored in the form of an optically anisotropic phase object by means of linearly polarized laser light using an optically non-linear effect on the basis of the positive polymerisation and anisotropy of the liquid crystals used, leading selectively to a variation in the spatial orientation of the mesogenic groups in a film consisting of a liquid-crystalline main chain polymer and causes a local change in the refractive index, whilst, during the storage of the information, the film is in the inherently stable range below the glass transition temperature Tg of the polymeric liquid crystals in the viscoelastic state above the glass transition temperature of the polymeric liquid crystals but below the temperature of transition from liquid crystalline to isotropic, in an antisotropic phase.

2. Process according to claim 1, characterized in that a macroscopically oriented polymeric liquid crystal film is used as the storage medium.

3. Process according to claim 1, characterized in that a macroscopically disorientated liquid crystal film is used as the storage medium.

4. Process according to claim 1, characterized in that the temperature of the storage medium at which information is stored is in the range of the inherently stable state below the glass transition temperature Tg of the liquid-crystalline main chain polymer and after the heat source has been switched off the local information is fixed in the glass state of the polymer.

5. Process according to claims 1 to 4, characterized in that it is arranged to delete the information stored by recreating the original state of orientation in the local area by a local temperature increase and subsequent cooling in the electrical or magnetic field.

6. Process according to claims 1 to 4, characterised in that it is arranged to delete all the information fed in and to recreate the initial state by increasing the temperature of the storage medium and cooling it in the electrical or magnetic field.

7. Process according to claims 1 and 6, characterized in that, in order to delete all the information fed in and recreate the macrozcopically disorientated state, the temperature of the storage medium is increased beyond $T_{NI}$ and subsequently cooled.

8. Process according to claims 5 and 6, characterised in that the temperature increase leads to an anisotropic liquid phase of the liquid-crystalline polymer used.

9. Process according to claims 5 and 6, characterised in that the temperature increase leads to the isotropic phase of the liquid crystalline polymer used.

10. Process according to claims 1 to 9, characterised in that the absorption characteristics of the storage medium are chosen so that the information can be stored with a laser beam of suitable wavelength and suitable intensity and read with another laser beam of a different wavelength without disturbing the information stored.

11. Process according to claims 1 to 10, characterised in that the variation in the state of order is achieved by the application of an electrical field.

12. Process according to claims 1 to 11, characterised in that the macroscopically oriented film is situated between two superimposed plates or films.

13. Process according to claims 1 to 12, characterised in that the storage medium is adapted, in its absorption characteristics, to the emission wavelength of the recording laser.

14. Process according to claim 13, characterised in that the storage medium contains a dye which is adapted, in its absorption characteristics, to the emission wavelength of the recording laser.

15. Process according to claim 13, characterised in that the liquid crystalline polymer is adapted, by the inclusion of a dye-containing comonomer unit in the polymerisation process, to the emission wavelength of the recording laser, in its absorption characteristics.

16. Process according to claims 10 to 15, characterised in that the necessary extinction of the storage medium is set up by means of the concentration of dye.

17. Process according to claims 1 to 16, characterised in that the reading wavelength is outside the absorption peak of the dye relevant to the recording process.

**Revendications**

1. Procédé de mémorisation optique rèversible d'informations dans un support de mémorisation critallin liquide à polymère en chaîne principale au moyen de lumière laser, caractérisé en ce que des informations sont mises en mémoire sous forme d'un objet de phase optiquement anisotrope au moyen de lumière laser polarisée linéairement, par un effet optiquement non linéaire basé sur l'anisotropie de polarisation positive des cristaux liquides utilisés, effet qui conduit sélectivement à une variation de l'orientation dans l'espace des groupes mésogènes dans un film en un polymére en chaîne principale cristallin liquide et qui a pour conséquence une modification locale de l'indice de réfraction, le film se trouvant dans une phase anisotrope lors de la mise en mémoire des informations dans la gamme à forme stable au-dessous de la température de transition vitreuse Tg des cristaux liquides polymères ou à l'état visco-élastique au-dessus de la température de transition vitreuse, mais audessous du passage de l'état cristallin liquide à l'état isotrope des cristaux liquides polymères.

2. Procédé selon la revendication 1, caractérisé en ce qu' un film de cristaux liquides polymères macroscopiquement orienté est utilisé comme support de mémorisation.

3. Procédé selon la revendication 1, caractérisé en ce qu'un film de cristaux liquides macroscopiquement désorienté est utilisé comme support de mémorisation.

4. Procédé selon la revendication 1, caractérisé en ce que la température du support de mémorisation à laquelle les informations sont mises en mémoire se situe dans la gamme de l'état de forme stable au-dessous de la température de transition vitreuse Tg du polymère en chaîne principale cristallin liquide, et en ce qu'après la coupure de la source de chaleur, les informations locales sont fixées dans l'état vitreux du polymère.

5. Procédé selon l'une quelconque des revendications 1 à 4, caractérisé en ce qu'il est conçu en vue de l'effacement des informations mémorisées, par le fait que localement, par élévation de la température suivie de refroidissement dans le champ électrique ou magnétique, l'état d'orientation initial est rétabli dans la région locale.

6. Procédé selon l'une quelconque des revendications 1 à 4, caractérisé en ce qu'il est conçu en vue de l'effacement de la totalité des informations mémorisées et du rétablissement de l'état initial, par le fait que la température du support de mémorisation est élevée et que celui-ci est refroidi dans le champ électrique ou magnétique.

7. Procédé selon l'une quelconque des revendications 1 à 6, caractérisé en ce que pour l'effacement de la totalité des informations introduites et le rétablissement de l'état macroscopiquement désorienté, la température du support de mémorisation est élevée audelà de $T_{NI}$, puis le support est refroidi.

8. Procédé selon la revendication 5 ou 6, caractérisé en ce que l'élévation de température conduit à une phase liquide anisotrope du polymère cristallin liquide utilisé.

9. Procédé selon la revendication 5 ou 6, caractérisé en ce que l'élévation de température conduit à la phase isotrope du polymère cristallin liquide utilisé.

10. Procédé selon l'une quelconque des revendications 1 à 9, caractérisé en ce que les caractéristiques

d'absorption du support de mémorisation sont choisies de telle sorte que les informations puissent être mises en mémoire avec un rayon laser de longueur d'onde appropriée et d'intensité appropriée et que les informations mémorisées puissent être lues sans être altérées avec un autre rayon laser ayant une autre longueur d'onde.

**11.** Procédé selon l'une quelconque des revendications 1 à 10, caractérisé en ce que la variation de l'état ordonné est obtenue par application d'un champ électrique.

**12.** Procédé selon l'une quelconque des revendications 1 à 11, caractérisé en ce que le film orienté macroscopiquement se trouve entre deux plaques disposées l'une au-dessus de l'autre.

**13.** Procédé selon l'une quelconque des revendications 1 à 12, caractérisé en ce que le support de mémorisation est adapté, en ce qui concerne ses caractéristiques d'absorption, à la longueur d'onde d'émission du laser d'écriture.

**14.** Procédé selon la revendication 13, caractérisé en ce que le support de mémorisation contient un colorant qui est adapté, en ce qui concerne ses caractéristiques d'absorption, à la longueur d'onde d'émission du laser d'écriture.

**15.** Procédé selon la revendication 13, caractérisé en ce que le polymère cristallin liquide est adapté, en ce qui concerne ses caractéristiques d'absorption, à la longueur d'onde d'émission du laser d'écriture par inclusion en liaison polymère d'un motif comonomère qui contient un colorant

**16.** Procédé selon l'une quelconque des revendications 10 à 15, caractérisé en ce que l'extinction nécessaire du support de mémorisation est réglée au moyen de la concentration de colorant.

**17.** Procédé selon l'une quelconque des revendicatons 1 à 16, caractérisé en ce que la longueur d'onde de lecture se situe en dehors du maximum d'absorption du colorant associé au processus d'écriture.

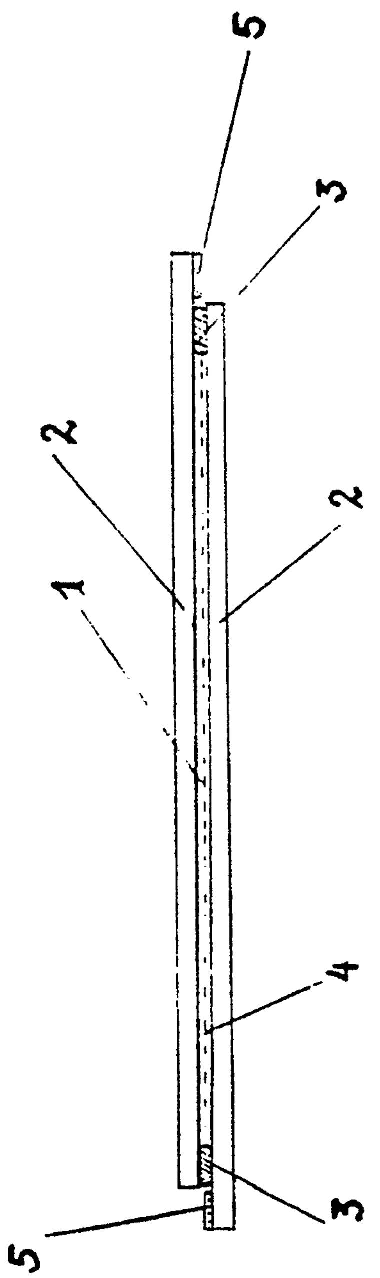


FIG. 1